(19) Europäisches Patentamt
European Patent Office
Office européen des brevets

(11) **EP 0 797 371 B1**

(12) **EUROPÄISCHE PATENTSCHRIFT**

(45) Veröffentlichungstag und Bekanntmachung des Hinweises auf die Patenterteilung:
**26.05.2004 Patentblatt 2004/22**

(51) Int Cl.⁷: **H04Q 11/04**

(21) Anmeldenummer: **97103872.4**

(22) Anmeldetag: **07.03.1997**

(54) **Vermittlungseinrichtung und Verfahren zur Zuordnung von Zeitlagen zu einer Mehrkanal-Verbindung in einer Vermittlungseinrichtung**

Switching device and time slot allocation method for a multi-slot connection in a switching device

Dispositif de commutation et procédé d'attribution d'intervalles de temps jour une connexion à voies multiples dans un dispositif de commutation

(84) Benannte Vertragsstaaten:
**AT DE FR GB IT NL SE**

(30) Priorität: **21.03.1996 DE 19611236**

(43) Veröffentlichungstag der Anmeldung:
**24.09.1997 Patentblatt 1997/39**

(73) Patentinhaber: SIEMENS AKTIENGESELLSCHAFT
**80333 München (DE)**

(72) Erfinder: **Spahl, Gerd-Dieter**
**82178 Puchheim (DE)**

(56) Entgegenhaltungen:
**EP-A- 0 323 248      EP-A- 0 561 490**
**US-A- 5 005 170**

- **TAKAHASHI T: "TIME-SLOT SEQUENCE INTEGRITY FOR (N X 64) KB/S CONNECTION" ELECTRONICS AND COMMUNICATIONS IN JAPAN, PART I , Bd. 71, Nr. 3, 1988, Seiten 69-79, XP000024176 ISSN: 8756-6621**

**Beschreibung**

Die Erfindung betrifft eine Vermittlungseinrichtung und ein Verfahren zur Zuordnung von Zeitlagen zu einer Mehrkanalverbindung.

Vermittlungseinrichtungen in Kommunikationssystemen dienen dem Aufbau, der Steuerung und dem Abbau von Verbindungen zur Übertragung von Nutzinformation. Im einfachsten Fall besteht die Vermittlungseinrichtung aus einer Koppelstufe, die einen Teilnehmer A mit einem Teilnehmer B verbindet. Die Anschlüsse der Teilnehmer A und B können dabei auf einem Port oder verschiedenen Ports liegen.

Weiterhin ist es bekannt, daß eine Vermittlungseinrichtung mehrere Verbindungen im sogenannten Zeitmultiplex über eine einzige Verbindungsleitung realisieren kann. Eine solche physikalische Verbindungsleitung kann mehrere Kanäle übertragen, die beim Zeitmultiplex durch Zeitlagen gebildet werden. In einer nach diesem Prinzip betriebenen Vermittlungseinrichtung wird in einer Koppelstufe folglich keine physikalische Verbindung starr durchgeschaltet, sondern es findet eine Zuordnung von Zeitlagen für eine Verbindung statt.

Betrachtet man eine Verbindung von einem Teilnehmer A zu einem Teilnehmer B über eine Vermittlungseinrichtung, wobei die Verbindung vereinfachend als uni-direktional angesehen wird, so müssen vom Teilnehmer A ankommende Zeitlagen in der Vermittlungseinrichtung zu von der Vermittlungseinrichtung zum Teilnehmer B abgehende Zeitlagen zugeordnet werden. Damit findet eine Vermittlung der während der Zeitlagen übertragenen Information stattt. Beim Zeitmultiplex sind dabei die Zeitlagen nach Rahmen organisiert, d. h. ein Rahmen enthält K Zeitlagen, die jeweils verschiedenen Verbindungen zugeordnet werden können. Von Rahmen zu Rahmen bezeichnet jeweils die gleiche Zeitlage eine bestehende Verbindung.

Jeden der durch eine Zeitlage gebildeten Kanäle ist eine BitRate, zum Beispiel für B-Kanäle in ISDN-Vermittlungseinrichtungen 64 kBit pro Sekunde, zugeordnet. Erfordert nun eine Verbindung vom Teilnehmer A zum Teilnehmer B eine höhere BitRate, so ist eine Mehrkanal-Verbindung erforderlich. Dies bedeutet nichts anderes, als daß der Verbindung innerhalb eines Rahmens mehrere Zeitlagen zugeordnet werden müssen. Es ist dabei jedoch nicht erforderlich, daß diese Zeitlagen auf der gleichen physikalischen Verbindungsleitung übertragen werden.

Im Gegensatz zu Ein-Kanal-Verbindungen treten bei Mehrkanal-Verbindungen zusätzliche Schwierigkeiten auf. Üblicherweise wird vom Teilnehmer A ein kontinuierlicher Informationsstrom erzeugt. Die Informationselemente dieses Informationsstromes sind gemäß einer bestimmten Reihenfolge angeordnet. Diese Reihenfolge muß auch beim Teilnehmer B nach Übertragung der Informationen gewährleistet sein. Die Kommunikationsendgeräte der Teilnehmer bzw. die Vermittlungseinrichtung haben dieser Forderung gerecht werden. Es ist wünschenswert, derartige Probleme von den Kommunikationsendgeräten fernzuhalten und schon in den Vermittlungseinrichtungen die anforderungsgemäße Behandlung von Mehrkanal-Verbindungen vorzusehen.

In TAKAHASHI T: "TIME-SLOT SEQUENCE INTEGRITY FOR (N X 64) KB/S CONNECTION", ELECTRONICS AND COMMUNICATIONS IN JAPAN, TEIL I , Bd. 71, Nr. 3, 1988, Seiten 69-79, wird ein Algorithmus zur Ermittlung mehrerer möglicher, Bit-Integrität erhaltender Werte für einen Zuordnungsversatz vorgeschlagen. Die Komplexität dieses Algorithmus beträgt $N^2$, wobei N die Anzahl der Kanäle einer Mehrkanalverbindung bezeichnet.

Die Erfindung liegt die Aufgabe zugrunde, ein Verfahren zur Zuordnung von Zeitlagen zu einer Mehrkanal-Verbindung und eine Vermittlungseinrichtung zur Vermittlung einer Mehrkanalverbindung anzugeben, die einen geringen Berechnungsaufwand zur Ermittlung eines Wertebereichs für einen Bit-Integrität erhaltenden Zuordnungsversatz zwischen abgehenden und ankommenden Zeitlagen einer Mehrkanalverbindung erfordern. Diese Aufgabe wird durch das Verfahren nach dem Anspruch 1 und die Vermittlungseinrichtung nach dem Anspruch 7 gelöst. Vorteilhafte Ausgestaltungen sind den Unteransprüchen zu entnehmen.

Die Mehrkanal-Verbindung wird durch zumindest zwei ankommende und zwei abgehende Zeitlagen gebildet. Die bestimmte Anzahl n bezeichnet dabei die Zahl der ankommenden Zeitlagen für die Mehrkanal-Verbindung innerhalb eines ankommenden Rahmens mit insgesamt K Zeitlagen. Gleichvielen (n) abgehenden Zeitlagen in einem abgehenden Rahmen soll nun jeweils eine ankommende Zeitlage zugeordnet werden. Zur Kennzeichnung der Reihenfolge der ankommenden Zeitlagen innerhalb eines ankommenden Rahmens wird jeder ankommenden Zeitlage der Mehrkanal-Verbindung eine erste eindeutige Kennung zugeordnet. Die Gesamtheit der Informationen innerhalb der ankommenden Zeitlagen der Mehrkanal-Verbindung bildet die zu vermittelnde Mehrkanalinformation.

Ebenso wird den abgehenden Zeitlagen eine zweite, die Reihenfolge festlegende, eindeutige Kennung zugeordnet. Unter Beachtung der Position der ankommenden bzw. abgehenden Zeitlagen innerhalb der jeweiligen Rahmen wird eine erste Hilfsgröße bestimmt. Diese erste Hilfsgröße gibt die maximale Differenz an zwischen einer Zahl abgehender Zeitlagen und ankommender Zeitlagen für die Mehrkanal-Verbindung innerhalb der jeweiligen Rahmen bis zu einem eine abgehenden Zeitlage einschließenden Zeitpunkt. Diese erste Hilfsgröße kann daraufhin als Zuordnungsversatz für alle abgehenden Zeitlagen zur Zuordnung zu jeweils einer ankommenden Zeitlage verwendet werden. Ein Zuordnungsversatz von zum Beispiel drei bedeutet dabei für die Mehrkanal-Verbindung, daß die vierte abgehende Zeitlage der ersten ankommenden Zeitlage zugeordnet wird, die fünfte abgehende Zeitlage der zweiten ankommenden Zeitlage zugeordnet wird, usw. Umfaßt ein ankommender bzw. abgehender Rahmen wie vorstehend beispiels fünf Zeitlagen, dann wird der ersten abgehenden Zeitlage des darauffolgenden abgehenden Rahmens die dritte ankommende Zeitlage zugeordnet. Der Zuordnungsversatz kann also im Sinne einer Indexierung verstanden werden.

Zusätzlich zur ersten Hilfsgröße wird zur Lösung der erfindungsgemäßen Aufgabe jedoch auch eine zweite Hilfsgröße bestimmt. Diese zweite Hilfsgröße bezeichnet einen Wert, der die Addition der minimalen Differenz zwischen einer Zahl abgehender Zeitlagen und ankommender Zeitlagen für die Mehrkanal-Verbindung innerhalb der jeweiligen Rahmen vor einem durch eine abgehende Zeitlage gebildeten Zeitpunkt mit der Anzahl der zuzuordnenden Zeitlagen bestimmt. Die ankommende Zeitlage wird jedoch für diesen Zeitpunkt mitgezählt. Auch diese zweite Hilfsgröße kann als Zuordnungsversatz für alle abgehenden Zeitlagen zur Zuordnung zu jeweils einer ankommenden Zeitlage verwendet werden. Als Zuordnungsversatz eignet sich jedoch auch jeder andere Wert zwischen der ersten Hilfsgröße und der zweiten Hilfsgröße.

Wird die erste Hilfsgröße für den Zuordnungsversatz gewählt, dann entsteht eine minimale Verzögerung der Mehrkanalinformation in der Vermittlungseinrichtung. Jedoch auch jeder andere Wert bis zur zweiten Hilfsgröße schafft eine die Aufrechterhaltung der Reihenfolge der Informationselemente garantierende Zuordnung, die einen minimalen Rahmenversatz gewährleistet. Ein entscheidender Vorteil des erfindungsgemäßen Verfahrens ist es, daß die Reihenfolge der Informationselemente (bei digitalen Vermittlungssystemen auch Bit-Integrität genannt) bei jeder einzelnen Zuordnung erreicht wird. Damit erübrigt sich jede weitere Korrektur, die nötig wäre, wenn in Koppelstufen einer Vermittlungseinrichtung diese Bit-Integrität nicht gewährleistet wird. Weiterhin erweist es sich als vorteilhaft, daß beliebige abgehende Zeitlagen innerhalb abgehender Rahmen gewählt werden können und trotzdem das erfindungsgemäße Verfahren eine Zuordnung von abgehenden Zeitlagen zu ankommenden Zeitlagen bewirkt, die die Bit-Integrität garantiert.

Für die Zuordnung wurde bisher angenommen, daß ankommende und abgehende Rahmen zum gleichen Zeitpunkt beginnen und dieselbe Anzahl von Zeitlagen umfassen. Werden die Mehrkanalinformationen in der Vermittlungseinrichtung zwischengespeichert, dann kann eine Zwischenspeicherungsverzögerung dadurch berücksichtigt werden, indem für die Zuordnung der abgehenden Zeitlagen der Beginn eines ankommenden Rahmens um mindestens die Zwischenspeicherungsverzögerung versetzt vor dem Beginn eines abgehenden Rahmens festgelegt wird, wobei die Zuordnung der ersten Kennung beibehalten wird. Der Verfahrensablauf kann als solches beibehalten werden, wenn der Versatz genau der Zwischenspeicherungsverzögerung entspricht. Für jede Koppelstufe einer Vermittlungseinrichtung kann eine individuelle Zwischenspeicherungsverzögerung berücksichtigt werden.

Bei einer Zwischenspeicherung der zu vermittelnden Mehrkanalinformationen werden mitunter mehrere Zeitlagen zu einem Wort zusammengefaßt. In diesem Fall werden alle ankommenden Zeitlagen eines Wortes für die erste ankommende Zeitlage des jeweiligen Wortes bei der Bestimmung der Hilfsgrößen gezählt. Durch diese vorteilhafte Maßnahme kann wiederum individuell, wie bei der Berücksichtigung der Zwischenspeicherungsverzögerung, eine Anpassung des Algorithmus an die Besonderheiten der einzelnen Koppelstufen, die üblicherweise durch das Design der entsprechenden Koppel-Schaltkreise bestimmt sind, erreicht werden.

Gemäß einer weiteren vorteilhaften Ausgestaltung werden auf verschiedenen Verbindungsleitungen gleichzeitig vorliegende Zeitlagen bei der Bestimmung der Hilfsgrößen gemeinsam gezählt, wenn die ankommenden und/oder abgehenden Zeitlagen eines Rahmens auf verschiedenen Verbindungsleitungen verteilt sind. Dadurch ist das erfindungsgemäße Verfahren auch in Vermittlungseinrichtungen nutzbar, die Zeitlagen von mehreren Verbindungsleitungen zusammenfassen und Informationen verschiedener Zeitlagen auf mehrere abgehende Verbindungsleitungen verteilen können.

Umfaßt eine Vermittlungseinrichtung mehrere Koppelstufen, wird vorteilhafterweise der Zuordnungsversatz bzw. die Summe des Zuordnungsversatzes der einzelnen Koppelstufen gleich dem Produkt der Anzahl der zu vermittelnden Zeitlagen mit einer natürlichen Zahl gewählt. Dadurch wird zusätzlich zur Wahrung der Bit-Integrität auch eine Rahmen-Integrität gesichert, da die Informationen der Zeitlagen nicht nur in der richtigen Reihenfolge, sondern auch die Zeitlagen der Mehrkanal-Verbindung eines ankommenden Rahmens gemeinsam in einem abgehenden Rahmen enthalten sind.

Gemäß einer weiteren Ausgestaltungsform erfolgt bei bidirektionalen Verkehrsbeziehungen die Zuordnung der Zeitlagen in beiden Richtungen getrennt.

Im folgenden wird das erfindungsgemäße Verfahren und die erfindungsgemäße Vermittlungseinrichtung bezugnehmend auf die Figuren anhand von Ausführungsbeispielen näher erläutert.

Dabei zeigen

Figur 1 eine Vermittlungseinrichtung mit drei Koppelstufen,

Figur 2 eine schematische Darstellung der Zuordnung abgehender Zeitlagen zu ankommenden Zeitlagen auf jeweils einer Verbindungsleitung,

Figur 3 eine schematische Darstellung der Zuordnung abgehender Zeitlagen zu ankommenden Zeitlagen auf jeweils zwei Verbindungsleitungen,

Figur 4 eine schematische Darstellung der Zuord-nung abgehender Zeitlagen zu ankommen-den Zeitlagen unter Berücksichtigung einer Zwischenspeicherungsverzögerung bei einer wortweisen Zwischenspeicherung,

Figur 5 eine schematische Darstellung der Zuord-nung abgehender Zeitlagen zu ankommen-den Zeitlagen über mehrere Koppelstufen,

Figur 6 eine Vermittlungseinrichtung mit drei Koppelstufen und der Gewährleistung der Rahmen-Integrität bei jeder einzelnen Koppelstufe,

Figur 7 eine Vermittlungseinrichtung mit drei Koppelstufen, wobei die Rahmen-Integrität bei der letzten Koppelstufe wiederhergestellt wird, und

Figur 8 ein schematisches Auflaufdiagramm der Berechnung der ersten und zweiten Hilfsgröße.

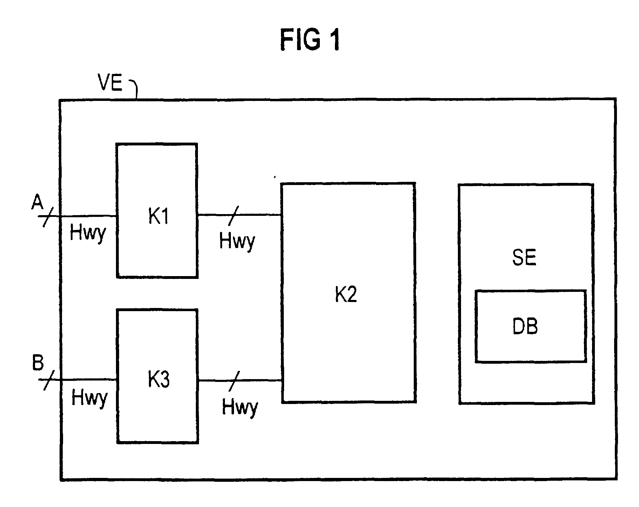

Die beispielhafte Vermittlungseinrichtung VE nach Figur 1 besteht aus drei Koppelstufen K1, K2, K3, wobei die zweite Koppelstufe K2 jeweils über einen aus Verbindungsleitungen bestehenden Highway Hwy mit der ersten Koppelstufe K1 und der dritten Koppelstufe K3 verbunden ist. Die Koppelstufe K1 stellt über einen Highway Hwy eine Verbindung zu einem Teilnehmer A und die dritte Koppelstufe K3 über einen weiteren Highway Hwy eine Verbindung zum Teilnehmer B her.

Die Vermittlungseinrichtung VE wird im Zeitmultiplex betrieben, so daß auf den Verbindungsleitungen die übertragenen Informationen zu Zeitlagen innerhalb von Rahmen zuordenbar sind. Die Vermittlungseinrichtung VE wird durch eine Steuereinrichtung SE gesteuert. Die programmgesteuerte Steuereinrichtung SE kann über Speicherbereiche verfügen, auf denen unter anderem eine Datenbasis DB zur Registrierung von für Verbindungen zur Verfügung stehenden abgehenden und ankommenden Zeitlagen $e_i$, $a_j$. Bei einem Verbin-dungsaufbau vom Teilnehmer A zum Teilnehmer B erfolgt durch die Steuereinrichtung SE eine Auswahl von Zeitlagen $e_i$, $a_j$ auf den Verbindungsleitungen Hwy, indem auf die Datenbasis DB zurückgegriffen wird.

Die Verbindung vom Teilnehmer A zum Teilnehmer B wird als Mehrkanal-Verbindung aufgebaut. Dies bedeutet, daß innerhalb eines Rahmens Re, Ra mehrere Zeitlagen $e_i$, $a_j$ für die Übertragung der Mehrkanalinformationen genutzt werden müssen. Dazu wird in der Steuereinrichtung SE der Vermittlungseinrichtung VE ein anhand der folgenden Figuren erläuterter Algorithmus angewandt.

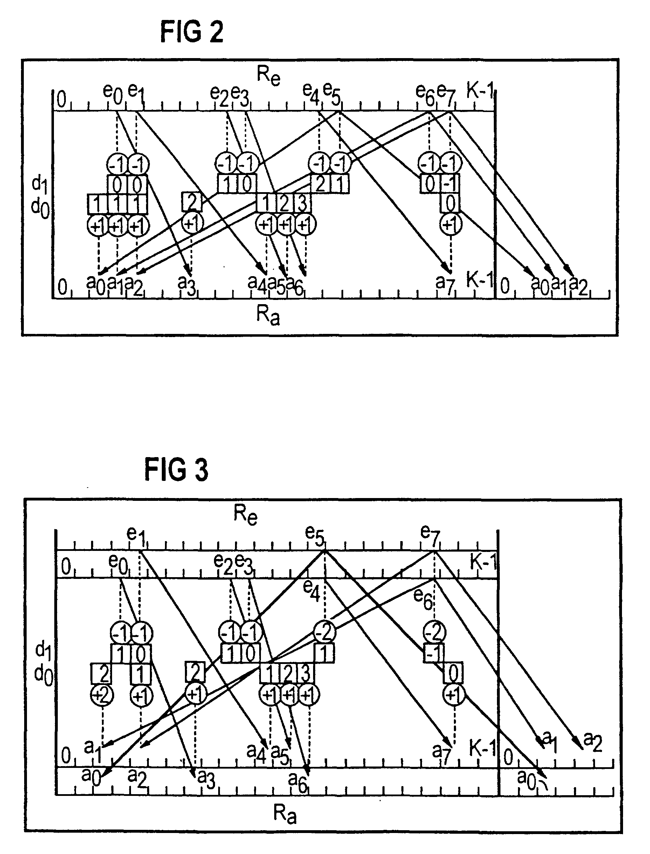

Nach Figur 2 umfaßt die Mehrkanalinformation beispielhaft 8 ankommende Zeitlagen $e_0$ bis $e_7$ inner-halb eines ankommenden Rahmens Re mit insgesamt K Zeitlagen. Der abgehende Rahmen Ra mit der gleichen Anzahl K Zeitlagen umfaßt ebenfalls 8 aus der Datenbasis DB ausgewählte abgehende Zeitlagen $a_0$ bis $a_7$. Die ankommenden Zeitlagen $e_0$ bis $e_7$ und die ab-gehenden Zeitlagen $a_0$ bis $a_7$ wurden entsprechend ih-rer Reihenfolge innerhalb der Rahmen Re, Ra mit einer eindeutigen ersten bzw. zweiten Kennung i, j bezeichnet. Die Position der abgehenden und ankommenden Zeitlagen $e_i$, $a_j$ kann dabei willkürlich innerhalb der ankommenden bzw. abgehenden Zeitrahmen Re, Ra gewählt sein.

In Figur 2 ist das Ergebnis der Berechnung der ersten und zweiten Hilfsgröße d0, d1 bereits dargestellt. Für jeden Zeitpunkt einer abgehenden Zeitlage $a_0$ bis $a_7$ wird durch die Steuereinrichtung SE die Differenz zwischen einer Zahl abgehender Zeitlagen $a_j$ und an-kommender Zeitlagen $e_i$ für die Mehrkanal-Verbindung innerhalb der jeweiligen Rahmen Ra, Re bestimmt. Dabei wird die abgehende Zeitlage $a_j$ des Zeitpunktes der Bestimmung mit eingeschlossen. In Figur 2 wurde die maximale Differenz, d.h. die erste Hilfsgröße d0 mit 3 bei der siebten abgehenden Zeitlage $a_6$ bestimmt.

Die zweite Hilfsgröße d1 wird dadurch bestimmt, daß für jeden Zeitpunkt einer ankommenden Zeitlage $e_0$ bis $e_7$ die Differenz zwischen einer Zahl ab-gehender Zeitlagen $a_j$ und ankommender Zeitlagen $e_i$ für die Mehrkanal-Verbindung innerhalb der jeweiligen Rahmen Re, Ra vor einem durch eine abgehende Zeit-lage $a_j$ gebildeten Zeitpunkt bestimmt wird. Der minimale Wert wurde hier mit - 1 zum Zeitpunkt der achten an-kommenden Zeitlage $e_7$ ermittelt. Zu diesem Wert - 1 wird daraufhin die Anzahl der zuzuordnenden Zeitlagen $a_j$ addiert (diese Anzahl ist gleich 8), wodurch sich beispielhaft der Wert 7 für die zweite Hilfsgröße d1 ergibt.

In einer allgemeinen Notation kann die Berechnungsvorschrift für die erste und zweite Hilfsgröße d0, d1 durch folgende Gleichungen angegeben werden:

$$d0 = \max\left(\left|\left\{a_j \middle| a_j \le zl\right\}\right| - \left|\left\{e_i \middle| e_i \le zl\right\}\right|\right)$$

$$d1 = \min\left(\left|\left\{a_j \middle| a_j < zl\right\}\right| - \left|\left\{e_i \middle| e_i \le zl\right\}\right|\right) + n$$

wobei zl den Zeitpunkt einer Zeitlage und n die Anzahl der ankommenden Zeitlagen $e_i$ der Mehrkanal-Verbin-dung angibt. {m|E} ist eine Menge, deren Elemente m die Eigenschaft E aufweisen. Der Operator |.| gibt dabei die Anzahl der Elemente der Menge an.

Zur Zuordnung wurde in Figur 2 die erste Hilfsgröße d0 (3) ausgewählt, so daß die vierte abgehende Zeitlage $a_3$ der ersten ankommenden Zeitlage $e_0$ zuge-

ordnet wird usw. Die schwarzen durchgezogenen Pfeile geben dabei diese Zuordnung an. Die gestrichelten Pfeile bezeichnen ebenfalls diese Zuordnung, jedoch sind dies die Zuordnungen, die zu einem Versatz im Rahmen führen und ersetzten die durchgezogenen Pfeile für die entsprechenden ankommenden Zeitlagen $e_5$ bis $e_7$.

Die schematische Darstellung der Zuordnung nach Figur 3 erfolgt nach dem gleichen Prinzip wie die Zuordnung nach Figur 2. Jedoch ist zu beachten, daß sowohl die ankommenden Zeitlagen $e_0$ bis $e_7$ als auch die abgehenden Zeitlagen $a_0$ bis $a_7$ auf jeweils zwei Verbindungsleitungen (Highways) Hwy verteilt sind. Zum gleichen Zeitpunkt vorliegende Zeitlagen $e_i$, $a_j$ werden bei der Bestimmung der Hilfsgrößen d0, d1 jedoch gemeinsam gezählt. Somit ergibt sich erneut für die erste Hilfsgröße d0 der Wert 3 und für die zweite Hilfsgröße d1 der Wert 7. Wiederum wird durch Anwendung des erfindungsgemäßen Verfahrensablaufs eine Zuordnung der Zeitlagen $e_i$, $a_j$ zu einer Mehrkanal-Verbindung unter Wahrung der Bit-Integrität erreicht.

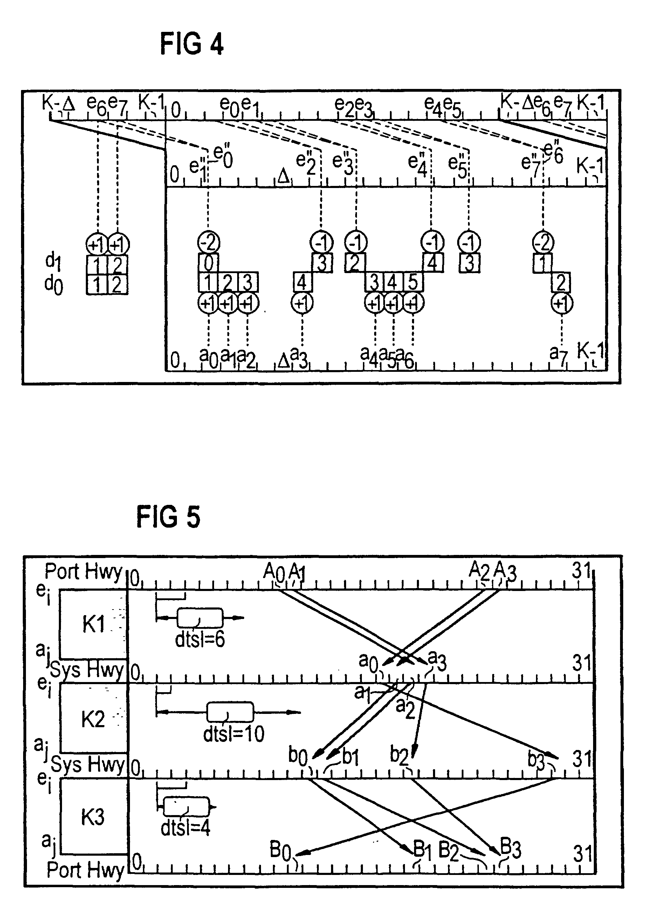

Anhand von Figur 4 wird die Zuordnung abgehender Zeitlagen $a_j$ zu ankommenden Zeitlagen $e_i$ unter Berücksichtigung einer Zwischenspeicherungsverzögerung dtsl=6 und einer 2 Zeitlagen $e_i$ zu einem Wort zusammenfassenden Zwischenspeicherung erläutert. Der Zeitpunkt des Beginns eines ankommenden Rahmens Re wird hier, zum Beispiel um die Zwischenspeicherungsverzögerung dtsl=6 dem Beginn eines abgehenden Rahmens Ra vorweggestellt. Dieser Versatz des Beginns eines ankommenden Rahmens Re berücksichtigt die Zwischenspeicherungsverzögerung dtsl. Gleichzeitig werden bei dieser Zwischenspeicherung jeweils zwei Zeitlagen $e_i$ gemeinsam abgespeichert.

Die siebte und achte ankommende Zeitlage $e_6$, $e_7$ werden gemeinsam abgespeichert, ebenso die fünfte und sechste ankommende Zeitlage $e_4$, $e_5$. Durch die gemeinsame Zwischenspeicherung wirken diese Zeitlagen jeweils wie eine einzige ankommende Zeitlage $e_i$. Dieser Umstand muß bei der Bestimmung der ersten und zweiten Hilfsgröße d0, d1 berücksichtigt werden. Dies geschieht, indem ankommende Zeitlage $e_6$, $e_7$ bzw. $e_4$, $e_5$ für den Zeitpunkt einer abgehenden Zeitlage $a_j$ gemeinsam gezählt werden. Nach Figur 4 wurde für die erste Hilfsgröße d0 der Wert 5 und für die zweite Hilfsgröße d1 der Wert 8 (0) ermittelt. Aus dem Wertebereich des Zuordnungsversatzes 1 zwischen 5 und 8 kann daraufhin ein Wert (der Zuordnungsversatz l) gewählt werden, mit dem eine Zuordnung abgehender Zeitlagen $a_j$ zu ankommenden Zeitlagen $e_i$ erfolgt.

Die Zuordnung der abgehenden Zeitlagen $a_j$ zu ankommenden Zeitlagen $e_i$ nach Figur 5 bezieht sich auf die drei Koppelstufen K1, K2, K3 nach Figur 1. Vier abgehende Zeitlagen $a_j$ der dritten Koppelstufe K3 werden unter Zuhilfenahme der zweiten Koppelstufe K2 vier ankommenden Zeitlagen $e_i$ der ersten Koppelstufe K1 zugeordnet. Die Zwischenspeicherungsverzögerungen dtsl der Koppelstufen K1, K2, K3 sind dabei unterschiedlich. Die Zwischenspeicherungsverzögerung dtsl der ersten Koppelstufe K1 beträgt = 6, die der zweiten Koppelstufe K2 = 10 und die der dritten Koppelstufe K3 = 4. Die erste und dritte Koppelstufe K1, K3 speichern zwei Zeitlagen wortweise. Die zweite Koppelstufe K2 nimmt die Zwischenspeicherung zeitlagenbezogen vor. Anhand von Figur 5 ist ersichtlich, daß auf jeder einzelnen Koppelstufe K1, K2, K3 die Reihenfolge der Informationselemente in den Zeitlagen bestehen bleibt, also die Bit-Integrität gewahrt wird. Die durchgezogen gezeichneten Zuordnungen haben keine Rahmenversatz, die gestrichelt gezeichneten haben eine Rahmenversatz von 1. Die Information der Zeitlage A0 erhält beispielsweise der Teilnehmer B in der Zeitlage B2 einen Rahmen später. Die Zeitlage A2 wird von Teilnehmer B zwei Rahmen später in der Zeitlage B0 empfangen.

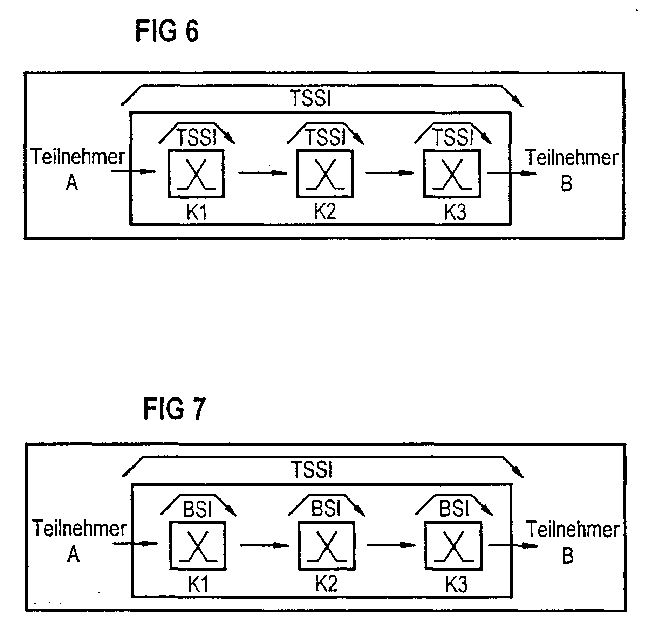

Anhand der Figuren 6 und 7 wird gezeigt, daß durch geeignete Wahl des Zuordnungsversatzes 1 auch über mehrere Koppelstufen K1, K2, K3 hinweg eine Rahmen-Integrität TSSI erreicht werden kann. Dabei ist es möglich, entsprechend Figur 6, die Rahmenintegrität TSSI in jeder einzelnen Koppelstufe K1, K2, K3 herzustellen. Gemäß Figur 7 kann dies jedoch auch erfolgen, indem erst bei der letzten Koppelstufe K3 eine Korrektur vorgenommen und die Rahmenintegrität TSSI hergestellt wird. Die Rahmenintegrität TSSI wird gewährleistet, indem aus dem Wertebereich für den Zuordnungsversatz 1 von der ersten Hilfsgröße d0 bis zur zweiten Hilfsgröße d1 ein Wert ausgewählt wird, der gleich dem Produkt der Anzahl n der zu vermittelnden Zeitlagen der Mehrkanal-Verbindung mit einer natürlichen Zahl ist. In den Zuordnungsbeispielen von Figuren 2, 3 und 4 bedeutet dies, daß der Zuordnungsversatz 1 oder die Summe der Zuordnungsversätze 1 der einzelnen Koppelstufen K1, K2, K3 gleich 0, 8 oder einem Vielfachen von 8 ist.

Soll die Rahmenintegrität TSSI in der letzten Koppelstufe K3 korrigiert werden, dann ist es vorteilhaft, bestimmte abgehende Zeitlagen $a_j$ innerhalb eines abgehenden Rahmens für die Mehrkanal-Verbindung auszuwählen. Entspricht beispielsweise das Muster der abgehenden Zeitlagen $a_j$ dem der ankommenden Zeitlagen $e_i$, kann in jedem Fall eine Korrektur zur Rahmenintegrität TSSI durchgeführt werden.

Soll die Bit-Integrität BSI bzw. die Rahmenintegrität TSSI bei einer bidirektionalen Verbindung in beiden Richtungen hergestellt werden, so ist das erfindungsgemäße Verfahren für beide Vermittlungsrichtungen getrennt anzuwenden. Das Verfahren ist anwendbar, wenn beliebige abgehende Zeitlagen $a_j$ aus der Datenbasis DB ausgewählt werden. Es kann jedoch vorteilhaft sein, wenn bei der Auswahl abgehender Zeitlagen $a_j$ eine bestimmte den Algorithmus optimierende Vorauswahl getroffen wird. Durch diese Maßnahme, kann die Vermittlungsverzögerung verringert und ein minimaler Rahmenversatz erzielt werden.

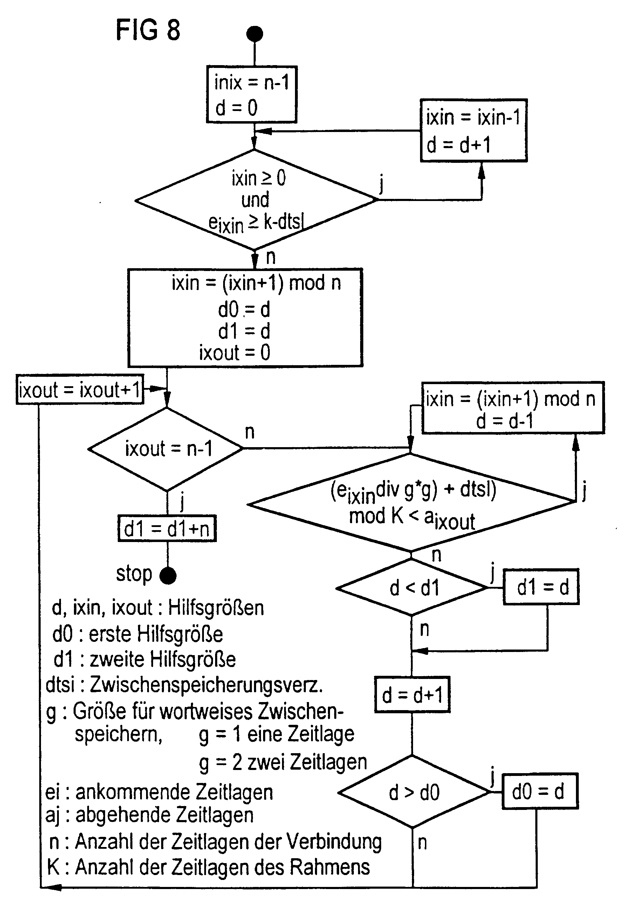

In Figur 8 ist die Berechnung der ersten und zweiten Hilfsgröße d0, d1 anhand eines Ablaufdiagramms dargestellt. Dieser Ablauf stellt eine Verwirklichung der oben genannten Gleichungen dar. Die Indexierung der Zeitlagen $e_i$ und $a_j$ erfolgt von 0 bis n-1. In einer ersten Schleife wird eine Hilfsgröße ixin so eingestellt, daß eine mit dieser Hilfsgröße ixin indizierte ankommende Zeitlage $e_i$ vor dem Ende des ankommenden Rahmen Re, verringert um die Zwischenspeicherungsverzögerung dtsl eintrifft. Mittels der zweiten Schleife wird unter Berücksichtigung der Zwischenspeicherungsverzögerung dtsl und einer eventuellen wortweisen Zwischenspeicherung eine Ausgangsgröße d für die weitere Berechnung der ersten und zweiten Hilfsgröße d0, d1 bestimmt, indem die Menge ankommender und abgehender Zeitlagen $e_i$ und $a_j$ für verschiedene Zeitpunkte innerhalb eines Rahmens Re, Ra betrachet und verglichen wird.

**Patentansprüche**

1. Verfahren zur Zuordnung von Zeitlagen zu einer Mehrkanal-Verbindung in einer Vermittlungseinrichtung (VE), bei dem

   - die Mehrkanal-Verbindung zumindest zwei ankommende und eine gleiche Anzahl abgehender Zeitlagen ($e_i$, $a_j$) umfaßt,
   - den ankommenden Zeitlagen ($e_i$) der Mehrkanal-Verbindung innerhalb eines ankommenden Rahmens (Re) eine erste eindeutige Kennung (i) zur Festlegung einer Reihenfolge zugeordnet wird und die ankommenden Zeitlagen ($e_i$) zu vermittelnden Mehrkanal-Informationen sind,
   - den abgehenden Zeitlagen ($a_j$) der Mehrkanal-Verbindung innerhalb eines abgehenden Rahmens (Ra) eine zweite eindeutige Kennung (j) zur Festlegung einer Reihenfolge zugeordnet wird zugeordnet und die abgehenden Zeitlagen ($a_j$) vermittelte Mehrkanal-Informationen sind,
   - eine erste Hilfsgröße (d0) ermittelt wird, welche für die Mehrkanal-Verbindung eine maximale Differenz zwischen einer Anzahl abgehender Zeitlagen ($a_j$) und einer Anzahl ankommender Zeitlagen ($e_i$)innerhalb einer Zeitdauer eines ankommenden Rahmens (Re)und eines zugeordneten abgehenden Rahmens (Ra) bis zu einem Zeitpunkt angibt, der die in der Reihenfolge letzte abgehende Zeitlage ($a_j$) umfaßt,

   **dadurch gekennzeichnet, daß**

   - eine zweite Hilfsgröße (d1) ermittelt wird, welche für die Mehrkanal-Verbindung eine Summe aus einer Anzahl (n) der ankommenden und abgehenden Zeitlagen der Mehrkanal-Verbindung und aus einer minimalen Differenz zwischen einer Anzahl abgehender Zeitlagen ($a_j$) und einer Anzahl ankommender Zeitlagen ($e_i$) innerhalb einer Zeitdauer eines ankommenden Rahmens (Re) und eines zugeordneten abgehenden Rahmens (Ra) angibt, wobei die Anzahl abgehender Zeitlagen ($a_j$) nur vor einem jeweiligen Zeitpunkt gelegene abgehende Zeitlagen ($a_j$) und die Anzahl ankommender Zeitlage ($e_i$) auch eine am jeweiligen Zeitpunkt gelegene ankommende Zeitlage ($e_i$) umfaßt,

   - ein Wert zwischen der ersten Hilfsgröße (d0) und der zweiten Hilfsgröße (d1) als Zuordnungsversatz (1) für alle abgehenden Zeitlagen ($a_j$, j=i+1) zur Zuordnung zu jeweils einer ankommenden Zeitlage ($e_i$) gewählt wird.

2. Verfahren nach Anspruch 1, **dadurch gekennzeichnet, daß** eine Zwischenspeicherungsverzögerung (dtsl) der Vermittlungseinrichtung (VE) bei einer Zwischenspeicherung der zu vermittelnden Mehrkanal-Informationen berücksichtigt wird, indem für die Zuordnung der abgehenden Zeitlagen ($a_j$) der Beginn eines ankommenden Rahmens (Re) um mindestens die Zwischenspeicherungsverzögerung (dtsl) versetzt vor den Beginn eines abgehenden Rahmens (Ra) festgelegt wird, wobei die Zuordnung der ersten Kennung (i) beibehalten wird.

3. Verfahren nach der Ansprüche 1 oder 2, **dadurch gekennzeichnet, daß** für eine bei einer Zwischenspeicherung der zu vermittelnden Mehrkanal-Informationen mehrere Zeitlagen ($e_i$, $a_j$) zu einem Wort zusammenfassenden Vermittlungseinrichtung (VE) alle ankommenden Zeitlagen ($e_i$) eines Wortes für die erste ankommende Zeitlage ($e_i$) des jeweiligen Wortes bei der Bestimmung der Hilfsgröße (d0, d1) gezählt werden.

4. Verfahren nach einem der vorherigen Ansprüche, **dadurch gekennzeichnet, daß** mindestens die ankommenden und/oder abgehenden Zeitlagen ($e_i$, $a_j$) eines Rahmens (Re, Ra) auf verschiedene Verbindungsleitungen (Hwy) verteilt sind und gleichzeitig vorliegende Zeitlagen ($e_i$, $a_j$) auf verschiedenen Verbindungsleitungen (Hwy) bei der Bestimmung der Hilfsgröße (d0, d1) gemeinsam gezählt werden.

5. Verfahren nach einem der vorherigen Ansprüche, **dadurch gekennzeichnet, daß** für eine oder mehrere Koppelstufen (K1, K2, K3) innerhalb der Vermittlungseinrichtung (VE) der Zuordnungsversatz (1) bzw. die Summe des Zuordnungsversatzes (1) der einzelnen Koppelstufen (K1, K2, K3) gleich dem Produkt der Anzahl (n) der zu vermittelnden Zeitlagen ($e_i$) mit einer natürlichen Zahl ist.

6. Verfahren nach einem der vorherigen Ansprüche, **dadurch gekennzeichnet, daß** bei einer bidirektionalen Verkehrsbeziehung die Zuordnung der Zeitlagen ($e_i$, $a_j$) in beiden Richtungen getrennt durchgeführt wird.

7. Vermittlungseinrichtung (VE) zur Vermittlung einer Mehrkanal-Verbindung mit

- einer Datenbasis (DB) für abgehende, einer Anzahl (n) ankommender Zeitlagen zuordenbaren Zeitlagen ($a_j$),
- mit einer Steuereinrichtung zur Zuordnung der abgehenden Zeitlagen ($a_j$) zu jeweils einer ankommenden Zeitlage ($e_i$),

wobei

- die Mehrkanal-Verbindung zumindest zwei ankommende und eine gleiche Anzahl abgehender Zeitlagen ($e_i$, $a_j$) umfaßt,
- in der Datenbasis (DB) den ankommenden Zeitlagen ($e_i$) der Mehrkanal-Verbindung innerhalb eines ankommenden Rahmens (Re) eine erste eindeutige Kennung (i) zur Festlegung einer Reihenfolge zugeordnet wird und die ankommenden Zeitlagen ($e_i$) zu vermittelnden Mehrkanal-Informationen sind,
- in der Datenbasis (DB) den abgehenden Zeitlagen ($a_j$) der Mehrkanal-Verbindung innerhalb eines abgehenden Rahmens (Ra) eine zweite eindeutige Kennung (j) zur Festlegung einer Reihenfolge zugeordnet wird zugeordnet und die abgehenden Zeitlagen ($a_j$) vermittelte Mehrkanal-Informationen sind,
- durch die Steuereinrichtung (SE) eine erste Hilfsgröße (d0) ermittelt wird, welche für die Mehrkanal-Verbindung eine maximale Differenz zwischen einer Anzahl abgehender Zeitlagen ($a_j$) und einer Anzahl ankommender Zeitlagen ($e_i$) innerhalb einer Zeitdauer eines ankommenden Rahmens (Re) und eines zugeordneten abgehenden Rahmens (Ra) bis zu einem Zeitpunkt angibt, der die in der Reihenfolge letzte abgehende Zeitlage ($a_j$) umfaßt,

**dadurch gekennzeichnet, daß**

- durch die Steuereinrichtung (SE) eine zweite Hilfsgröße (d1) ermittelt wird, welche für die Mehrkanal-Verbindung eine Summe aus einer Anzahl (n) der ankommenden und abgehenden Zeitlagen der Mehrkanal-Verbindung und aus einer minimalen Differenz zwischen einer Anzahl abgehender Zeitlagen ($a_j$) und einer Anzahl ankommender Zeitlagen ($e_i$) innerhalb einer Zeitdauer eines ankommenden Rahmens (Re) und eines zugeordneten abgehenden Rahmens (Ra) angibt, wobei die Anzahl abgehender Zeitlagen ($a_j$) nur vor einem jeweiligen Zeitpunkt gelegene abgehende Zeitlagen ($a_j$) und die Anzahl ankommender Zeitlage ($e_i$) auch eine am jeweiligen Zeitpunkt gelegene ankommende Zeitlage ($e_i$) umfaßt,
- durch die Steuereinrichtung (SE) ein Wert zwischen der ersten Hilfsgröße (d0) und der zweiten Hilfsgröße (d1) als Zuordnungsversatz (1) für alle abgehenden Zeitlagen ($a_j$, j=i+1) zur Zuordnung zu jeweils einer ankommenden Zeitlage ($e_i$) gewählt wird.

8. Vermittlungseinrichtung (VE) nach Anspruch 7, **dadurch gekennzeichnet, daß** durch die Steuereinrichtung (SE) eine Zwischenspeicherungsverzögerung (dtsl) der Vermittlungseinrichtung (VE) bei einer Zwischenspeicherung der zu vermittelnden Mehrkanal-Informationen berücksichtigt wird, indem die Steuereinrichtung für die Zuordnung der abgehenden Zeitlagen ($a_j$) den Beginn eines ankommenden Rahmens (Re) um mindestens die Zwischenspeicherungsverzögerung (dtsl) versetzt vor den Beginn eines abgehenden Rahmens (Ra) festlegt, wobei die Zuordnung der ersten Kennung (i) beibehalten wird.

9. Vermittlungseinrichtung (VE) nach einem der Ansprüche 7 oder 8, **dadurch gekennzeichnet, daß** die Vermittlungseinrichtung (VE) aus einer oder mehreren Koppelstufen (K1, K2, K3) besteht und die Steuerungseinrichtung derart ausgebildet ist, daß der Zuordnungsversatz (1) bzw. die Summe des Zuordnungsversatzes (1) der einzelnen Koppelstufen (K1, K2, K3) gleich dem Produkt der Anzahl (n) der zu vermittelnden Zeitlagen ($e_i$) mit einer natürlichen Zahl gewählt wird.

**Claims**

1. Method for allocation of time slots to a multi-slot connection in a switching device (VE), whereby

- the multi-slot connection has at least two incoming and an equal number of outgoing time slots ($e_i$, $a_j$),
- the incoming time slots ($e_i$) of the multi-slot connection within an incoming frame (Re) are allocated a first unique identification (i) for determining a sequence and the incoming time slots ($e_i$) are multi-slot information to be switched,
- the outgoing time slots ($a_j$) of the multi-slot connection within an outgoing frame (Ra) are allocated a second unique identification (j) for determining their sequence and the outgoing time slots ($a_j$) are switched multi-slot information,
- a first auxiliary variable (d0) is determined, that, for the multi-channel connection, gives a maximum difference between a number of outgoing time slots ($a_j$) and a number of incoming times slots ($e_i$) within a time duration of an incoming frame (Re) and an allocated outgoing frame (Ra) up to a time point that includes the last outgoing time slot ($a_j$) of the sequence,

**characterized in that**

- a second auxiliary variable (d1) is determined that, for the multi-slot connection, gives a sum of a number (n) of the incoming and outgoing time slots of a multi-slot connection and from a minimum difference between a number of outgoing time slots ($a_j$) and a number of incoming time slots ($e_i$) within a time duration of an incoming frame (Re) and an allocated outgoing frame (Ra), with the number of outgoing time slots ($a_j$) including only time slots ($a_j$) located before a particular time point and a number of incoming time slots ($e_i$) also including a time slot ($e_i$) located at the particular time point,
- a value between the first auxiliary variable (d0) and second auxiliary variable (d1) being chosen as the allocation shift (1) for all outgoing time slots ($a_j$, j=i+1) for allocation in each case to an incoming time slot ($e_i$).

2. Method in accordance with claim 1, **characterized in that** a buffer-storage delay (dtsl) of the switching device (VE) is taken into account at the buffer storage of the multi-slot information to be switched, **in that** for the allocation of the outgoing time slots ($a_j$), the start of an incoming frame (Re) is set shifted before the start of an outgoing frame (Ra) by at least the buffer-storage delay (dtsl), with the allocation of the first identification (i) being retained.

3. Method in accordance with claims 1 or 2, **characterized in that** for a switching device (VE) combining several times slots ($e_i$, $a_j$) to form a word at the buffer storage of multi-slot information to be switched, all incoming time slots ($e_i$) of a word are counted for the first incoming time slot ($e_i$) of the relevant word when determining the auxiliary variable (d0, d1).

4. Method in accordance with one of the preceding claims, **characterized in that** at least the incoming and/or outgoing time slots ($e_i$, $a_j$) of the frame (Re, Ra) are distributed over various trunk lines (Hwy), and time slots ($e_i$, $a_j$) occurring simultaneously on different trunk lines (Hwy) are jointly counted when determining the auxiliary variable (d0, d1).

5. Method in accordance with one of the preceding claims, **characterized in that** for one or more switching stages (K1, K2, K3) within the switching device (VE) the allocation shift (1) or the sum of the allocation shifts (1) of the individual switching stages (K1, K2, K3), is equal to the product of the number (n) of the time slots ($e_i$) with a natural number.

6. Method in accordance with one of the preceding claims, **characterized in that** for a bidirectional traffic relationship the allocation of the time slots ($e_i$, $a_j$) takes place separately in both directions.

7. Switching device (VE) for switching a multi-slot connection with

- a database (DB) for outgoing time slots ($a_j$) that can be assigned a number (n) of incoming time slots,
- a control device for allocation of the outgoing time slots ($a_j$) to an incoming time slot ($e_i$) in each case,

whereby

- the multi-slot connection has at least two incoming and an equal number of outgoing time slots ($e_i$, $a_j$),
- in the database (DB), the incoming time slots ($e_i$) of the multi-slot connection within an incoming frame (Re) are allocated a first unique identification (i) for determining a sequence, and the incoming time slots ($e_i$) are multi-slot information to be switched,
- in the database (DB), the outgoing time slots ($a_j$) of the multi-slot connection within an outgoing frame (Ra) are assigned a second unique identification (j) for determining a sequence, and the outgoing time slots ($a_j$) are switched multi-slot information,
- by means of the control device (SE), a first auxiliary variable (d0) is determined, that for the multi-slot connection gives a maximum difference between a number of outgoing time slots ($a_j$) and the number of incoming time slots ($e_i$) within a time duration of an incoming frame (Re) and an allocated outgoing frame (Ra) up to a time point that includes the last outgoing time slot ($a_j$) in the sequence,

**characterized in that**

- by means of the control device (SE) a second auxiliary variable (d1) is determined that for the multi-slot connection that gives a sum from a number (n) of the incoming and outgoing time slots of the multi-slot connection and from a minimum difference between a number of outgoing time slots ($a_j$) and a number of incoming time slots ($e_i$) within a time duration of an incoming frame (Re) and an allocated outgoing frame (Ra), with the number of outgoing time slots ($a_j$) including only time slots ($a_j$) present before a particular time point, and a number of incoming time slots ($e_i$) also including an incoming time slot ($e_i$) present at a particular time point,

- by means of the control device (SE) a value between the first auxiliary variable (d0) and the second auxiliary variable (d1) is chosen as the allocation shift (1) for all outgoing time slots ($a_j$, j=i+1) for allocation to an incoming time slot ($e_i$) in each case.

8. Switching device (VE) in accordance with claim 7, **characterized in that** by means of the control device (SE) a buffer-storage delay (dtsl) of the switching device (VE) is allowed for during the buffer storage of the multi-slot information to be switched, **in that** the control device for the allocation of the outgoing time slots ($a_j$) specifies the start of an incoming frame (Re) shift before the start of an outgoing frame (Ra) by at least the buffer-storage delay (dtsl), with the allocation of the first identification (i) being retained.

9. Switching device (VE) in accordance with one of claims 7 or 8, **characterized in that** the switching device (VE) consists of one or more switching stages (K1, K2, K3) and the control device is designed in such a way that the allocation shift (1) or the sum of the allocation shift (1) of the individual switching stages (K1, K2, K3) is chosen to be equal to the product of the number (n) of the time slots ($e_i$) to be switched with a natural number.

## Revendications

1. Procédé d'attribution d'intervalles de temps pour une connexion à voies multiples dans un dispositif de commutation (VE), dans lequel

- la connexion à voies multiples comprend au moins deux intervalles de temps entrants et un même nombre d'intervalles de temps sortants ($e_i$, $a_j$),
- une première identification (i) univoque est attribuée aux intervalles de temps entrants ($e_i$) de la connexion à voies multiples dans une plage entrante (Re) pour déterminer une séquence et dans lequel les intervalles de temps entrants ($e_i$) sont des informations à voies multiples à commuter,

- une seconde identification (j) univoque est attribuée aux intervalles de temps sortants ($a_j$) de la connexion à voies multiples dans une plage sortante (Ra) pour déterminer une séquence et dans lequel les intervalles de temps sortants ($a_j$) sont des informations à voies multiples commutées,
- une première variable auxiliaire (d0) est déterminée, laquelle indique pour la connexion à voies multiples une différence maximale entre un nombre d'intervalles de temps sortants ($a_j$) et un nombre d'intervalles de temps entrants ($e_i$) pendant une durée d'une plage entrante (Re) et d'une plage sortante attribuée (Ra) jusqu'à un moment qui comprend le dernier intervalle de temps sortant ($a_j$) dans la séquence,

**caractérisé en ce que**

- une seconde variable auxiliaire (d1) est déterminée, laquelle indique, pour la connexion à voies multiples, une somme constituée d'un nombre (n) des intervalles de temps entrants et sortants de la connexion à voies multiples et d'une différence minimale entre un nombre d'intervalles de temps sortants ($a_j$) et un nombre d'intervalles de temps entrants ($e_i$) pendant une durée d'une plage entrante (Re) et d'une plage sortante attribuée (Ra), le nombre d'intervalles de temps sortants ($a_j$) comprenant seulement des intervalles de temps sortants ($a_j$) situés avant un moment respectif et le nombre d'intervalles de temps entrants ($e_i$) comprenant également un intervalle de temps entrant ($e_i$) situé au moment respectif,
- une valeur entre la première variable auxiliaire (d0) et la seconde variable auxiliaire (d1) est sélectionnée comme décalage d'attribution (1) pour tous les intervalles de temps sortants ($a_j$, j = i + 1) pour l'attribution à respectivement un intervalle de temps entrant ($e_i$).

2. Procédé selon la revendication 1, **caractérisé en ce qu'**un retard de mémorisation temporaire (dts1) du dispositif de commutation (VE) est pris en compte lors d'une mémorisation temporaire des informations à voies multiples à commuter, du fait que, pour l'attribution des intervalles de temps sortants ($a_j$), le début d'une plage entrante (Re) est décalé au moins du retard de mémorisation temporaire (dts1) avant le début d'une plage sortante (Ra), l'attribution de la première identification (i) étant conservée.

3. Procédé selon l'une quelconque des revendications 1 ou 2, **caractérisé en ce que** pour un dispositif de commutation (VE) regroupant plusieurs intervalles de

temps ($e_i$, $a_j$) en un mot lors d'une mémorisation temporaire des informations à voies multiples à commuter, tous les intervalles de temps entrants ($e_i$) d'un mot sont comptés pour le premier intervalle de temps entrant ($e_i$) du mot respectif lors de la détermination de la variable auxiliaire (d0, d1).

4. Procédé selon l'une quelconque des revendications précédentes, **caractérisé en ce qu'**au moins les intervalles de temps entrants et/ou les intervalles de temps sortants ($e_i$, $a_j$) d'une plage (Re, Ra) sont répartis sur différentes lignes de connexion (Hwy) et **en ce que** les intervalles de temps ($e_i$, $a_j$) présents simultanément sont comptés en commun sur différentes lignes de connexion (Hwy) lors de la détermination de la variable auxiliaire (d0, d1).

5. Procédé selon l'une quelconque des revendications précédentes, **caractérisé en ce que**, pour un ou plusieurs étages de couplage (K1, K2, K3) dans le dispositif de commutation (VE), le décalage d'attribution (1) resp. la somme de décalage d'attribution (1) de chacun des étages de couplage (K1, K2, K3) est égal(e) au produit du nombre (n) des intervalles de temps ($e_i$) à commuter par un nombre naturel.

6. Procédé selon l'une quelconque des revendications précédentes, **caractérisé en ce que**, en cas d'un rapport de trafic bidirectionnel, l'attribution des intervalles de temps ($e_i$, $a_j$) est réalisée de manière séparée dans les deux sens.

7. Dispositif de commutation (VE) pour la commutation d'une connexion à voies multiples, comprenant

   - une base de données (DB) pour des intervalles de temps sortants ($a_j$) attribuables à un nombre (n) d'intervalles de temps entrants,
   - un dispositif de commande pour l'attribution des intervalles de temps sortants ($a_j$) à respectivement un intervalle de temps entrant ($e_i$),
   - la connexion à voies multiples comprenant au moins deux intervalles de temps entrants et un même nombre d'intervalles de temps sortants ($e_i$, $a_j$),
   - dans la base de données (DB), une première identification (i) univoque étant attribuée aux intervalles de temps entrants ($e_i$) de la connexion à voies multiples dans une plage entrante (Re) pour déterminer une séquence, et les intervalles de temps entrants ($e_i$) étant des informations à voies multiples à commuter,
   - dans la base de données (DB), une seconde identification (j) univoque étant attribuée aux intervalles de temps sortants ($a_j$) de la connexion à voies multiples dans une plage sortante (Ra) pour déterminer une séquence, et les intervalles de temps sortants ($a_j$) étant des informations à voies multiples commutées,
   - une première variable auxiliaire (d0) étant déterminée par le dispositif de commande (SE), laquelle indique pour la connexion à voies multiples une différence maximale entre un nombre d'intervalles de temps sortants ($a_j$) et un nombre d'intervalles de temps entrants ($e_i$) pendant une durée d'une plage entrante (Re) et d'une plage sortante attribuée (Ra) jusqu'à un moment qui comprend le dernier intervalle de temps sortant ($a_j$) dans la séquence,

   **caractérisé en ce que**

   - une seconde variable auxiliaire (d1) est déterminée par le dispositif de commande (SE), laquelle, pour la connexion à voies multiples, indique une somme constituée d'un nombre (n) des intervalles de temps entrants et sortants de la connexion à voies multiples et d'une différence minimale entre un nombre d'intervalles de temps sortants ($a_j$) et un nombre d'intervalles de temps entrants ($e_i$) pendant une durée d'une plage entrante (Re) et d'une plage sortante attribuée (Ra), le nombre d'intervalles de temps sortants ($a_j$) comprenant seulement des intervalles de temps sortants ($a_j$) situés avant un moment respectif et le nombre d'intervalles de temps entrants ($e_i$) comprenant également un intervalle de temps entrant ($e_i$) situé au moment respectif,
   - une valeur entre la première variable auxiliaire (d0) et la seconde variable auxiliaire (d1) est sélectionnée par le dispositif de commande (SE) comme décalage d'attribution (1) pour tous les intervalles de temps sortants ($a_j$, j = i + 1) pour l'attribution à respectivement un intervalle de temps entrant ($e_i$).

8. Dispositif de commutation (VE) selon la revendication 7, **caractérisé en ce qu'**un retard de mémorisation temporaire (dts1) du dispositif de commutation (VE) est pris en compte par le dispositif de commande (SE) lors d'une mémorisation temporaire des informations à voies multiples à commuter, du fait que, pour l'attribution des intervalles de temps sortants ($a_j$), le dispositif de commande décale le début d'une plage entrante (Re) au moins du retard de mémorisation temporaire (dts1) avant le début d'une plage sortante (Ra), l'attribution de la première identification (i) étant conservée.

9. Dispositif de commutation (VE) selon l'une quelconque des revendications 7 ou 8,

**caractérisé en ce que** le dispositif de commutation (VE) est constitué d'un ou de plusieurs étages de couplage (K1, K2, K3) et **en ce que** le dispositif de commande est exécuté de telle manière que le décalage d'attribution (1) resp. la somme de décalage d'attribution (1) de chacun des étages de couplage (K1, K2, K3) est égal(e) au produit du nombre (n) des intervalles de temps ($e_i$) à commuter par un nombre naturel.

# FIG 1

## FIG 2

## FIG 3

## FIG 4

## FIG 5

## FIG 6

## FIG 7

# FIG 8

Flowchart:

- inix = n-1
  d = 0
- ixin = ixin-1
  d = d+1
- ixin ≥ 0
  und
  $e_{ixin} \geq k\text{-dtsl}$ → j
- n
- ixin = (ixin+1) mod n
  d0 = d
  d1 = d
  ixout = 0
- ixout = ixout+1
- ixout = n-1 → n
- ixin = (ixin+1) mod n
  d = d-1
- $(e_{ixin}\text{div } g{*}g) + \text{dtsl})$
  mod K < $a_{ixout}$ → j
- j
- d1 = d1+n
- n
- d < d1 → j → d1 = d
- stop ●
- n
- d = d+1
- d > d0 → j → d0 = d
- n

d, ixin, ixout : Hilfsgrößen

d0 : erste Hilfsgröße

d1 : zweite Hilfsgröße

dtsi : Zwischenspeicherungsverz.

g : Größe für wortweises Zwischenspeichern,      g = 1 eine Zeitlage
                g = 2 zwei Zeitlagen

ei : ankommende Zeitlagen

aj : abgehende Zeitlagen

n : Anzahl der Zeitlagen der Verbindung

K : Anzahl der Zeitlagen des Rahmens